Europäisches Patentamt

**European Patent Office**

Office européen des brevets

(11) Publication number: **0 420 692 A2**

## (12) EUROPEAN PATENT APPLICATION

(21) Application number: 90310681.3

(51) Int. Cl.5: **G01N 17/00, G02F 1/37**

(22) Date of filing: 28.09.90

(30) Priority: 29.09.89 JP 254955/89
28.12.89 JP 344339/89
02.02.90 JP 22125/90
27.04.90 JP 113223/90
31.07.90 JP 203549/90
31.07.90 JP 203559/90

(43) Date of publication of application:
03.04.91 Bulletin 91/14

(84) Designated Contracting States:
DE FR GB NL

(71) Applicant: **Kabushiki Kaisha Toshiba**
**72, Horikawa-cho Saiwai-ku**
**Kawasaki-shi(JP)**

(72) Inventor: **Kawachi, Masaru, c/o Intellectual**
**Property Div.**
**Kabushiki Kaisha Toshiba, 1-1 Shibaura**
**1-chome**
**Minato-ku, Tokyo 105(JP)**
Inventor: **Takena, Michiko, c/o Intellectual**
**Property Div.**
**Kabushiki Kaisha Toshiba, 1-1 Shibaura**
**1-chome**
**Minato-ku, Tokyo 105(JP)**
Inventor: **Terashima, Kazutaka, c/o Intellectual**
**Property Div**
**Kabushiki Kaisha Toshiba, 1-1 Shibaura**
**1-chome**
**Minato-ku, Tokyo 105(JP)**

(74) Representative: **Freed, Arthur Woolf et al**
**MARKS & CLERK 57-60 Lincoln's Inn Fields**
**London WC2A 3LS(GB)**

(54) Nonlinear optical crystal damage measuring method and damage recovering apparatus.

(57) A damage measuring method and a damage recovering apparatus for a nonlinear optical crystal are disclosed. This nonlinear optical crystal damage measuring method includes the steps of radiating visible light on a nonlinear optical crystal for generating a second harmonic of incident light, in a direction substantially perpendicular to the generated optical second harmonic, and metering transmission light obtained by the light radiation to measure a damage of the nonlinear optical crystal. One aspect of the nonlinear optical crystal damage recovering apparatus includes a heater (21) for heating a nonlinear optical crystal (11) for generating a second harmonic (14) of incident light (12). Another aspect of the nonlinear optical crystal damage recovering apparatus includes a halogen lamp for radiating visible light (15) on a nonlinear optical crystal (11) for generating a second harmonic (14) of incident light (12), in a direction substantially perpendicular to the generated optical second harmonic (14), a detector (17) for metering light (16) transmitted through the nonlinear optical crystal (11) upon light radiation by the halogen lamp, and a heater (21) for heating the nonlinear optical crystal (11) in accordance with a result of the detector (17). A heat-treatment temperature of the heater in these apparatuses is higher by 1°C than a phase matching temperature of the nonlinear optical crystal.

F I G. 1

F I G. 3

2

# NONLINEAR OPTICAL CRYSTAL DAMAGE MEASURING METHOD AND DAMAGE RECOVERING APPARATUS

The present invention relates to a nonlinear optical crystal damage measuring method for maintaining a stable state of a short-wavelength light source for use in, e.g., optical information processing or optical measurement, and a nonlinear optical crystal damage recovering apparatus using the same.

In recent years, a short-wavelength coherent light source has been developed to be applied to, e.g., a high-density optical disk system and a measurement and display system. Especially in an optical disk system, a short-wavelength light source is essential to realize a high density since a spot diameter of light focused on a disk surface is proportional to the wavelength of the light. As a short-wavelength light source, a semiconductor laser has advantages of a compact size, a light weight, and a low consumption power. Therefore, development of a laser having a shorter wavelength has been performed by using new materials, and an InGaAIP-based semiconductor laser having an oscillation wavelength in a 600 nm band (red) has already been put into practical use.

Although a green or blue semiconductor laser having a shorter wavelength has been studied, however, no laser which continuously oscillates at room temperature has been obtained, and realization of such a laser is not yet foreseen.

As another means of realizing a short wave light source, a wavelength converting optical element using a nonlinear optical crystal is developed. A phenomenon in which when light is radiated on a certain type of crystal, a harmonic of the radiated light is obtained is known as so-called Second Harmonic Generation (SHG). Such a crystal is called a nonlinear optical crystal. For example, when infrared light having a wavelength of 1,060 nm of a YAG laser is radiated on a nonlinear optical crystal, green light having a half wavelength (530 nm) is obtained.

SHG has high performance:

a) A conversion efficiency is high.

b) Phase matching angle and temperature (angle and temperature at which phase velocities of a fundamental wave and a harmonic coincide with each other) fall within the ranges which can be easily used and are wide.

c) SHG is stable.

Known examples of a crystal exhibiting SHG are KDP, $LiNbO_3$, $\beta\text{-}BaB_2O_4$, and $KTiOPO_4$ (KTP). When wavelength converted laser or the like is formed by using these crystals, however, the following problems arise. That is, since laser light is concentrated at a high density on a nonlinear optical crystal, the crystal is easily damaged by the laser light. When the nonlinear optical crystal is damaged, influences such as a variation in refractive index and reduction in transparency of the crystal itself are caused to significantly degrade the element characteristics. In addition, although a function can be recovered by replacing a damaged nonlinear optical crystal, it is not easy to measure whether a nonlinear optical crystal is damaged.

As described above, according to SHG using nonlinear characteristics of a nonlinear optical crystal, a damage of the crystal caused by laser light radiation is serious. Therefore, when the crystal is used in an optical measurement and display system or the like for a long time period, a light conversion efficiency is reduced as the crystal is damaged. In addition, although a damaged crystal must be replaced, a replacement timing of the crystal is not predetermined but random. Therefore, it is very difficult to determine the replacement timing. Furthermore, the presence/absence of a damage of a nonlinear optical crystal incorporated in an optical system cannot be easily measured.

The present invention has been made in consideration of the above situation, and has as its object to provide a nonlinear optical crystal damage measuring method which can easily measure the presence/absence of a damage of a nonlinear optical crystal and can be carried out while the nonlinear optical crystal is incorporated in an optical system.

It is another object of the present invention to provide a nonlinear optical crystal damage recovering apparatus which can constantly supply a stable nonlinear optical crystal without replacing the nonlinear optical crystal and can be used while the nonlinear optical crystal is incorporated in an optical system.

A method for measuring a damage of a nonlinear optical crystal according to the present invention comprises the steps of radiating light on a nonlinear optical crystal for generating a second harmonic of incident light, and metering transmission light obtained by light radiation to measure a damage of the nonlinear optical crystal.

An apparatus for recovering a damage of a nonlinear optical crystal according to the present invention comprises a radiating means for radiating light on a nonlinear optical crystal for generating a second harmonic of incident light, a detecting means for detecting light transmitted through the nonlinear optical

EP 0 420 692 A2

crystal upon light radiation by the radiating means, and a heating means for heating the nonlinear optical crystal in accordance with a detection result of the detecting means.

This invention can be more fully understood from the following detailed description when taken in conjunction with the accompanying drawings, in which:

Fig. 1 is a schematic perspective view showing an arrangement of a nonlinear optical crystal damage measuring system according to the first embodiment of the present invention;

Fig. 2 is a graph showing a change over time in transmittivity of light radiated on a nonlinear optical crystal in a direction perpendicular to SHG light generated by the nonlinear optical crystal;

Fig. 3 is a schematic view showing a nonlinear optical crystal damage recovering system according to the second embodiment of the present invention;

Fig. 4 is a graph showing a change over time in SHG light output obtained when laser light is incident on a nonlinear optical crystal and recovery in SHG light output obtained when the nonlinear optical crystal is heat-treated;

Fig. 5 is a graph showing an SHG light output obtained when a heat treatment is performed every predetermined time period for a nonlinear optical crystal which generates an optical second harmonic upon incidence of laser light;

Fig. 6 is a schematic view showing an arrangement of a nonlinear optical crystal damage recovering system according to the third embodiment of the present invention;

Fig. 7 is a graph showing a transmittivity of a nonlinear optical crystal as a function of the wavelength of incident light;

Fig. 8 is a schematic view showing an arrangement of a heat treating apparatus for manufacturing a stable KTP single crystal which has no deficiency of oxygen in the crystal and in which only a small amount of an impurity is mixed;

Fig. 9 is a graph showing a light transmittivity of a KTP single crystal not subjected to a heat treatment and that of a KTP single crystal subjected to a heat treatment at a predetermined temperature;

Fig. 10 is a graph showing a relationship between a heat treatment temperature for a KTP single crystal and a conversion efficiency of SHG;

Fig. 11 is a graph showing variations with time in SHG light outputs of a KTP single crystal subjected to a high-temperature heat treatment and a KTP single crystal not subjected to the heat treatment, and recovery of damages obtained by performing the heat treatment;

Fig. 12 is a schematic view showing an arrangement of a crystal pulling apparatus for manufacturing a KTP single crystal which has no "pore" in the crystal and has only a small amount of an impurity;

Fig. 13 is a schematic view showing an arrangement of another crystal growing apparatus for manufacturing a KTP single crystal which has no "pore" in the crystal and has only a small amount of an impurity;

Fig. 14 is a schematic view showing an arrangement of a platinum frame used in the apparatus shown in Fig. 13;

Fig. 15 is a schematic view showing an arrangement of still another crystal growing apparatus for manufacturing a KTP single crystal which has no "pore" in the crystal and has only a small amount of an impurity;

Fig. 16 is a graph showing a relationship between an Fe concentration in a crystal and an output of SHG light;

Fig. 17 is a sectional view showing a nonlinear optical crystal subjected to optical polishing;

Fig. 18 is a graph showing a relationship between the transmittivity and wavelength of transmission light of a non-doped KTP crystal obtained before, immediately after, and 24 hours after X-ray radiation;

Fig. 19 is a graph showing a relationship between the transmittivity and wavelength of transmission light of a KTP crystal in which 150 ppm of an Fe impurity is doped obtained before, immediately after, and 24 hours after X-ray radiation;

Fig. 20 is a graph showing a relationship between the transmittivity and wavelength of transmission light of a KTP crystal in which 300 ppm of an Fe impurity is doped obtained before, immediately after, and 24 hours after X-ray radiation;

Fig. 21 is a graph showing a calibration curve for determining the Fe concentration obtained from the results shown in Figs. 18 to 20;

Fig. 22 is a schematic perspective view showing an arrangement of a conventional wavelength converting optical element;

Fig. 23 is a schematic perspective view showing an arrangement of a wavelength converting optical element in which a conversion efficiency at the short-wavelength side is increased and which can be used in combination with a semiconductor laser to obtain an SHG light output which is practically high

4

enough;

Figs. 24A to 24D are perspective views for explaining manufacturing steps of the wavelength converting optical element shown in Fig. 23;

Fig. 25 is a graph showing a relationship between a content of Rb in a nonlinear optical crystal which forms a waveguide portion of the wavelength converting optical element shown in Fig. 23 and a conversion efficiency of SHG;

Fig. 26 is a schematic view showing an arrangement of another heat-treating apparatus for manufacturing a stable KTP single crystal having no deficiency of oxygen in the crystal and only a small contamination of an impurity;

Fig. 27 is a graph showing a light transmittivity of a KTP single crystal not subjected to a heat treatment and that of a KTP single crystal subjected to a heat treatment in an atmosphere having a predetermined oxygen concentration;

Fig. 28 is a graph showing a relationship between an oxygen concentration in an atmosphere used in a heat treatment for a KTP single crystal and a conversion efficiency of SHG;

Fig. 29 is a graph showing a relationship between a heat-treatment temperature for a KTP single crystal and a conversion efficiency of SHG; and

Fig. 30 is a schematic view showing an arrangement of still another heat-treating apparatus for manufacturing a stable KTP single crystal having no deficiency of oxygen in the crystal and only a small contamination of an impurity.

The present inventors have conducted various experiments and made extensive studies with respect to a nonlinear optical crystal and found the following fact. That is, when a light transmittivity of a nonlinear optical crystal, which generates an optical second harmonic upon incidence of laser light, in a direction substantially perpendicular to a generation direction of the second harmonic (= incident light direction) is measured, the light transmittivity changes in accordance with the degree of a damage. More specifically, the transmittivity is decreased as the damage is increased. In addition, it was found that when a heat treatment was performed for a damaged nonlinear optical crystal, the damage was recovered.

In the present invention, therefore, on the basis of the above facts, light is radiated on a nonlinear optical crystal in a direction substantially perpendicular to an optical second harmonic generation direction, and the transmission light is detected. As a result, the presence/absence of a damage of the nonlinear optical crystal can be easily determined in accordance with an amount of the transmission light. In addition, this damage measurement can be performed while the nonlinear optical crystal is incorporated in an optical apparatus (e.g., a wavelength converted laser apparatus). As the light to be radiated to detect the transmission light, light emitted from a halogen lamp or the like having a wide peak in a visible range can be used. A nonlinear optical crystal in which generation of a damage is confirmed as a result of the measurement can be replaced with a nonlinear optical crystal having no damage to recover the function of an optical apparatus. Instead, a plurality of nonlinear optical crystals can be placed on a movable table to selectively use a nonlinear optical crystal having no damage by moving the table.

A damage recoverying apparatus according to the present invention has a means for heating a nonlinear optical crystal and heats a nonlinear optical crystal when a damage is generated in the crystal. As a result, the damage of the nonlinear optical crystal can be recovered to obtain an optical crystal having semipermanently stable characteristics. Therefore, optical information processing or optical measurement using a nonlinear optical crystal can be continuously performed without any interruption. Examples of the heating means are a metal heater, a laser light source, an infrared lamp, and an infrared flash lamp. These heating means need only be arranged around a nonlinear optical crystal. A heat-treatment temperature of the heating means is preferably $100°$ C to $300°$ C.

The present invention will be described in more detail below with reference to its embodiments shown in the accompanying drawings.

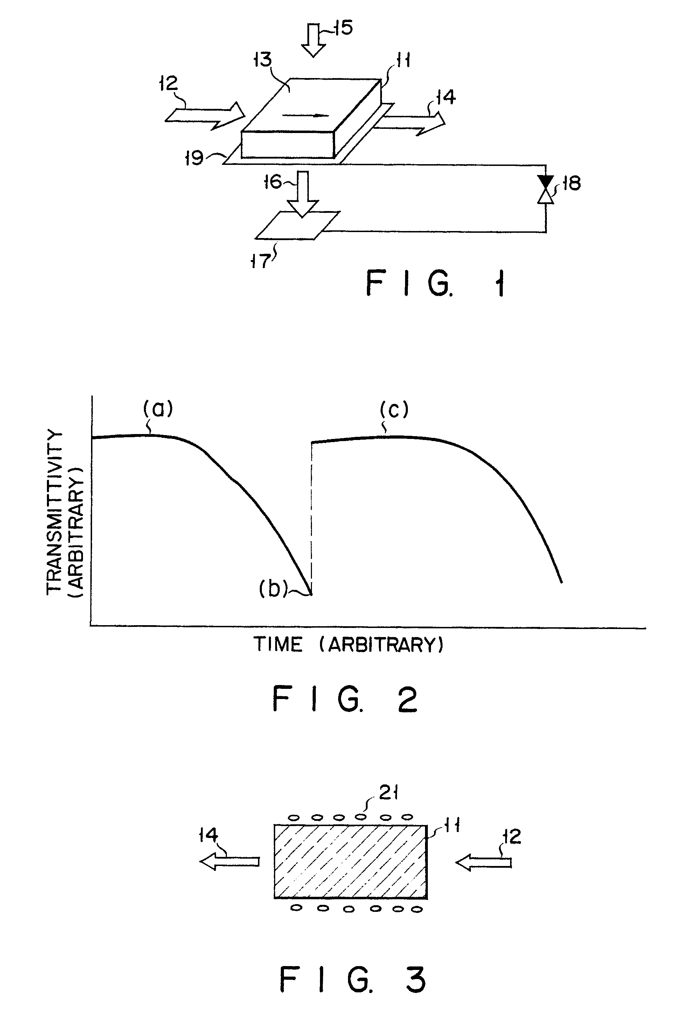

Fig. 1 is a schematic view showing an arrangement of a nonlinear optical crystal damage measuring system according to the first embodiment of the present invention. Referring to Fig. 1, reference numeral 11 denotes a nonlinear optical crystal such as KTP, and this optical crystal 11 is mounted on an X-Y stage 19 which can move in the X and Y directions. YAG laser light 12 having an external excitation light wavelength of 1,060 nm is incident on the optical crystal 11. Waveguide light 13 is guided in the nonlinear optical crystal 11 upon incidence of the light, and an optical second harmonic 14 (having a wavelength of about 530 nm) is generated from an end portion of the optical crystal 11.

In addition, light 15 emitted from, e.g., a halogen lamp is radiated on one major surface of the nonlinear optical crystal 11 in a direction perpendicular to the direction of the incident light 12, the waveguide light 13, and the optical second harmonic 14. Transmission light 16 from the optical crystal 11 obtained upon light radiation is detected by a detector (photomultiplier) 17. The X-Y stage 19 is moved by an optical switching element 18 in accordance with a detection output from the detector 17.

A damage measurement function of the system shown in Fig. 1 will be described below with reference to Fig. 2.

Fig. 2 shows a change in transmittivity obtained when the YAG laser light 12 is incident on the nonlinear optical crystal 11, e.g., KTP and at the same time light emitted from the halogen lamp 15 (wavelength = 400 to 700 nm) is radiated in a direction perpendicular to the waveguide light 13. When the laser light is incident for a certain period of time, the transmittivity of the optical crystal 11 is decreased due to a variation with time and changed from a state indicated by (a) to a state indicated by (b). Therefore, a damage in the optical crystal 11 can be measured. When a relationship between the transmittivity and the degree of damage (crystal characteristic degradation: second harmonic generation efficiency or the like) is obtained beforehand, a timing of replacement of the optical crystal 11 can be determined on the basis of the detector output. A time which elapses before the transmittivity reaches the state indicated by (b) is normally about 60 hours.

In this embodiment, the optical switching element 18 is connected to the detector 17 as shown in Fig. 1 so as to operate when the transmittivity is decreased to 70%. X and Y coordinates of the stage 19 on which the optical crystal 11 is mounted are designated by the optical switching element 18, and the optical crystal 11 is moved so that a crystal region having only a small damage, it any, is located at a laser light incident position. Therefore, the transmittivity is returned to its original state as indicated by (c), and optical measurement or information processing can be continuously performed.

Note that a halogen lamp is used as a light source for obtaining transmission light for the following reason. That is, the halogen lamp can emit light having a wavelength of 350 nm or more. A transmission cutoff of an optical crystal, e.g., of a KTP crystal is located near 300 nm, and a transmittivity of substantially 100% is obtained from about 400 nm to a long-wavelength side. Therefore, when a transmittivity is measured within the range of 400 to 700 nm by using the halogen lamp, a good result can be obtained without being externally, adversely affected.

Degraded characteristics of an optical crystal can be recovered by heat-treating the crystal. If the optical crystal has the degraded characteristics, it can be removed from the stage and subjected to the heat treatment. In this manner, a nonlinear optical crystal can be repeatedly used, and a highly stable nonlinear optical crystal can be supplied by replacement.

In this embodiment, another region of the optical crystal 11 is used to newly generate a second harmonic by moving the stage. However, a plurality of optical crystals 11 may be mounted on the stage 19 so that the optical crystal 11 having a damage can be replaced with another optical crystal by moving the stage. In this case, the damaged optical crystal 11 may be selectively heat-treated to be recovered. A motor or a piezo-electric element can be used as a mechanism for moving the stage 19. In order to measure a damage of the optical crystal 11 incorporated in an optical system, a window for light radiation and transmission light detection may be formed in a package containing the optical crystal 11 in addition to a window for incident light guidance and optical second harmonic extraction. Note that a variation in refractive index may be detected to measure a damage of a nonlinear optical crystal.

Fig. 3 is a schematic view showing an arrangement of a nonlinear optical crystal damage recovering system according to the second embodiment of the present invention. Referring to Fig. 3, reference numeral 11 denotes a nonlinear optical crystal such as KTP, and a metal heater, e.g., a kanthal wire 21 is wound around the optical crystal 11. The optical crystal 11 generates an optical second harmonic 14 (green laser having a wavelength of about 530 nm) upon incidence of YAG laser light 12 having an external excitation light wavelength of 1,060 nm. Although not shown in Fig. 3, halogen lamp light 15 is radiated on the optical crystal 11, and a detector 17 or the like is arranged to detect transmission light 16, thereby measuring a damage of the optical crystal 11, as in the first embodiment. Alternatively, the optical second harmonic 14 may be measured by an output monitor or the like to measure a damage.

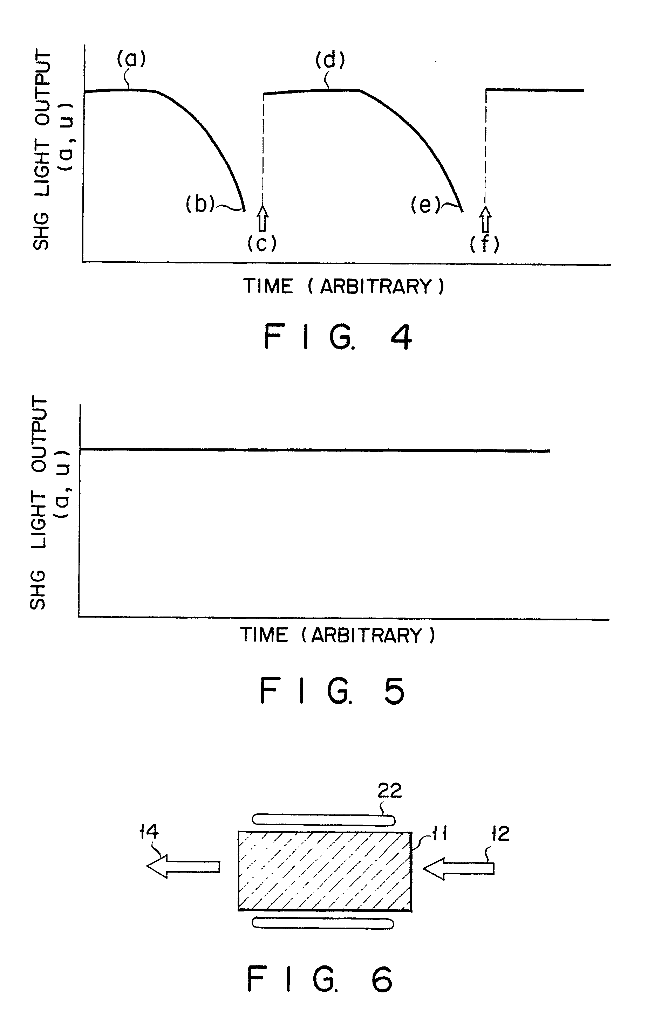

A damage recovery function of the system shown in Fig. 3 will be described below with reference to Fig. 4.

Fig. 4 shows a variation with time in output power obtained when the YAG laser light 12 is incident on the optical crystal 11 such as KTP. Referring to Fig. 4, reference symbol a.u denotes an arbitrary unit. When the laser light is incident for a certain period of time, the output power is decreased due to a variation with time and changed from a state indicated by (a) to a state indicated by (b). Subsequently, incidence of the laser light is stopped, and a power is applied to the heater 21 wound around the optical crystal 11 at a timing indicated by (c) to perform a heat treatment at a temperature of $100°C$. When the laser light is incident again on the optical crystal 11 after the heat treatment, the output power is returned to its original state as indicated by (d) in Fig. 4 to exhibit the effect of the present invention. The output power, however, is decreased again due to a variation with time to a state indicated by (e). It is found that the output power is recovered each time the heat treatment is performed.

On the basis of the above findings, by radiating laser light for a predetermined time period to generate a second harmonic and then heat-treating the optical crystal 11, a stable optical crystal which could keep original characteristics as shown in Fig. 5 could be obtained. In addition, as in the first embodiment, by measuring a damage of the optical crystal 11 on the basis of a detection output from the detector 17 and performing the heat treatment when a damage is caused, the number of heat treatment operations can be reduced since no unnecessary heat treatment is performed.

In this embodiment, a heat-treatment temperature was set at 100°C. However, the effect of the present invention can be obtained at the heat-treatment temperatures of up to 300°C. When the heat-treatment temperature is too low, no recovery function is found, and the output power is lowered. When the heat-treatment temperature is more than 300°C, the entire apparatus was influenced by heat to lead to an unpreferable result for the apparatus. In this embodiment, therefore, the heat-treatment temperature was set at 100°C to 300°C.

According to this embodiment described above, by heat-treating a nonlinear optical crystal, an optical damage can be recovered to maintain stable characteristics. In addition, the recovering mechanism can be incorporated in the apparatus and, thus, the apparatus can be semipermanently used without replacing the optical crystal. Furthermore, the recovering mechanism can be made compact and realized by providing a simple mechanism.

Fig. 6 is a schematic view showing an arrangement of a nonlinear optical crystal damage recovering system according to the third embodiment of the present invention. Note that the same reference numerals as in Fig. 3 denote the same parts and a detailed description thereof will be omitted. The third embodiment differs from the second embodiment in that an infrared lamp 22 is used in place of the heater 21 to perform a heat treatment.

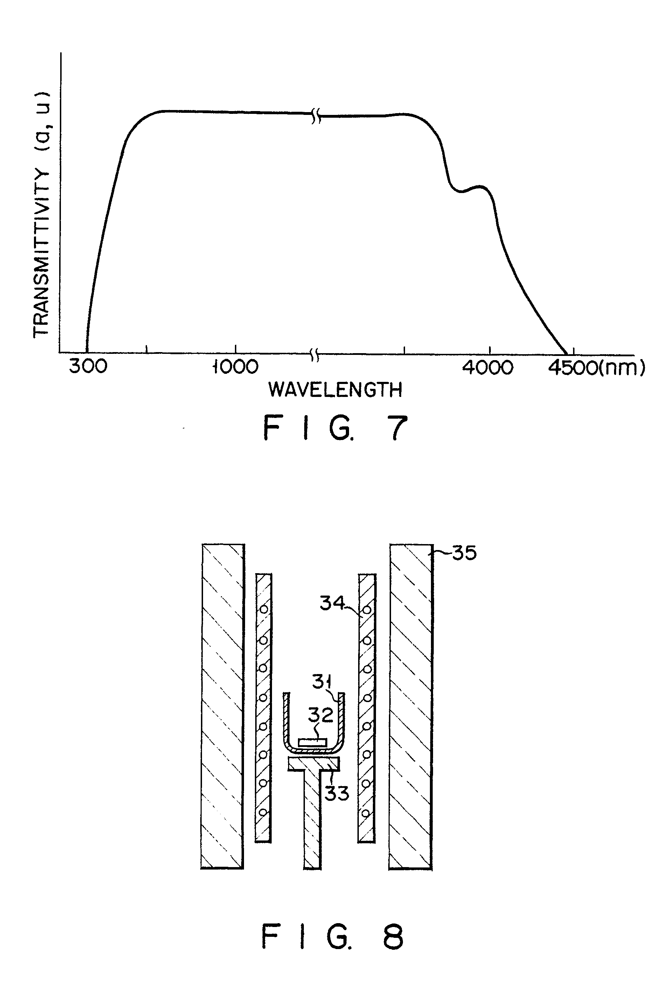

In this case, as infrared light for heating, light containing a component (having a wavelength of 4,500 nm or more) in an infrared cutoff region of a nonlinear optical crystal is used. This is because, as is apparent from Fig. 7 showing a transmittivity with respect to each wavelength of a nonlinear optical crystal, light having a wavelength shorter than the above wavelength (4,500 nm) is transmitted through the optical crystal 11, i.e., the effect of a heat treatment cannot be obtained. Thus, the same effects as shown in Figs. 4 and 5 can be obtained by incorporating a heat-treating mechanism using infrared light. In addition, a nonlinear optical crystal can be rapidly cooled to be reused after it is recovered by using a cooling means such as a cooling fan, and a range of application can be widened.

In the second and third embodiments, the heat-treatment temperature was set at 100°C to 300°C. According to experiments conducted by the present inventors, however, it was confirmed that the damage recovering effect was obtained by a heat treatment at a temperature higher than a phase matching temperature of an optical crystal. More specifically, the damage recovering effect was obtained at a temperature higher than the phase matching temperature by 1°C. Therefore, since the phase matching temperature is 25°C when KTP is used as the optical crystal 11 as in the second and third embodiments, a heat treatment need only be performed at a temperature of 26°C or more.

In addition, a similar treatment was performed by using $LiNbO_3$ instead of KTP as an optical crystal. In this case, since a phase matching temperature of $LiNbO_3$ is 62°C, the heat-treatment temperature was set at 63°C. Also in this case, the damage recovering effect was obtained as in the above embodiments. Furthermore, when a similar heat treatment was performed by using KN as the nonlinear optical crystal, the same effect was obtained. In this case, since a phase matching temperature of KN is 25°C, the heat-treatment temperature was set at 26°C.

Note that the present invention is not limited to the above embodiments. For example, although KTP is mainly used as a nonlinear optical crystal in the above embodiments, not only another crystal such as KDP, $LiNbO_3$, and $\beta$-$BaB_2O_3$ but also another optical crystal such as calcite and $LiTaO_3$ can be used. In addition, the light radiated on a nonlinear optical crystal to detect transmission light need not be perfectly perpendicular to the optical second harmonic generation direction but may be slightly offset from the perpendicular direction. Furthermore, the present invention can be variously modified and carried out without departing from the spirit and scope of the invention.

A crystal normally used as the nonlinear optical crystal as described above has both advantages and disadvantages. For example, KDP is water-soluble and unstable. Although $LiNbO_3$ provides a high-quality crystal, a conversion efficiency is low when a device is formed by directly using its bulk crystal. $\beta$-$BaB_2O_4$ has no moisture-absorption characteristics and a high breakdown threshold value of 2 GW/cm$^2$ and is transparent with respect to light having a wavelength of 190 to 2,500 nm and exhibit a high conversion efficiency (as described in, e.g., C. Chen et al., Sci Sinica B28 (1985), page 235). Since, however, $\beta$-$BaB_2O_4$ has a phase transition temperature near a melting point, it is difficult to form a crystal by using $\beta$-

$BaB_2O_4$.

To the contrary, a KTP single crystal which has recently attracted attention as a nonlinear optical crystal is stable, has a high conversion efficiency, and can be easily grown. This KTP single crystal also has problems in which an oxygen ($O_2$) deficiency occurs during crystal growth and impurities are easily mixed in the crystal. These problems prevent the KTP single crystal from being put into practical use as an optical element.

The present inventors have found that a highly stable KTP single crystal could be manufactured by growing a KTP single crystal by a known method and heat-treating the single crystal at a normal pressure in an oxygen-containing atmosphere at a temperature of 500°C to 900°C. According to this method, oxygen can be comparatively easily replenished in a crystal, and impurities in the crystal can be extracted therefrom. More specifically, in this method, a heat treatment is performed for a KTP single crystal manufactured by a liquid phase method such as a pulling method from a material melt, a natural nucleus generation method, or a hydrothermal synthesizing method. Therefore, oxygen is supplied into a crystal from the oxygen-containing atmosphere such as air, and the oxygen is diffused in the crystal by a high-temperature treatment to expel impurities outside the crystal. As a result, an amount of the impurities in the crystal is reduced, and a high-quality crystal having no degradation in crystal quality upon incidence of light can be obtained.

A method of manufacturing the KTP single crystal will be described below with reference to the accompanying drawings.

Fig. 8 is a schematic view showing an arrangement of a heat treating apparatus used in this embodiment. Referring to Fig. 8, reference numeral 31 denotes a crucible; 32, a single crystal; 33, a sample table; 34, a heater; and 35, a heat insulating member. The single crystal 32 to be refined, e.g., a KTP single crystal is put in the crucible 31 consisting of a heat-resistant material such as ceramic and placed together with the crucible 31 on the sample table 33. In this state, a heat treatment is performed in the air at a temperature of 800°C and a normal pressure for about 50 hours.

In this heat treatment, oxygen is diffused in the KTP single crystal to replenish oxygen deficient in crystal growth. At the same time, impurities in the crystal are expelled by this effect. A nonlinear optical crystal manufactured by crystal pulling or the like is unstable because it has water solubility or easily causes mixing of impurities in the crystal. In this embodiment, however, these problems are solved by diffusing oxygen by the above heat treatment.

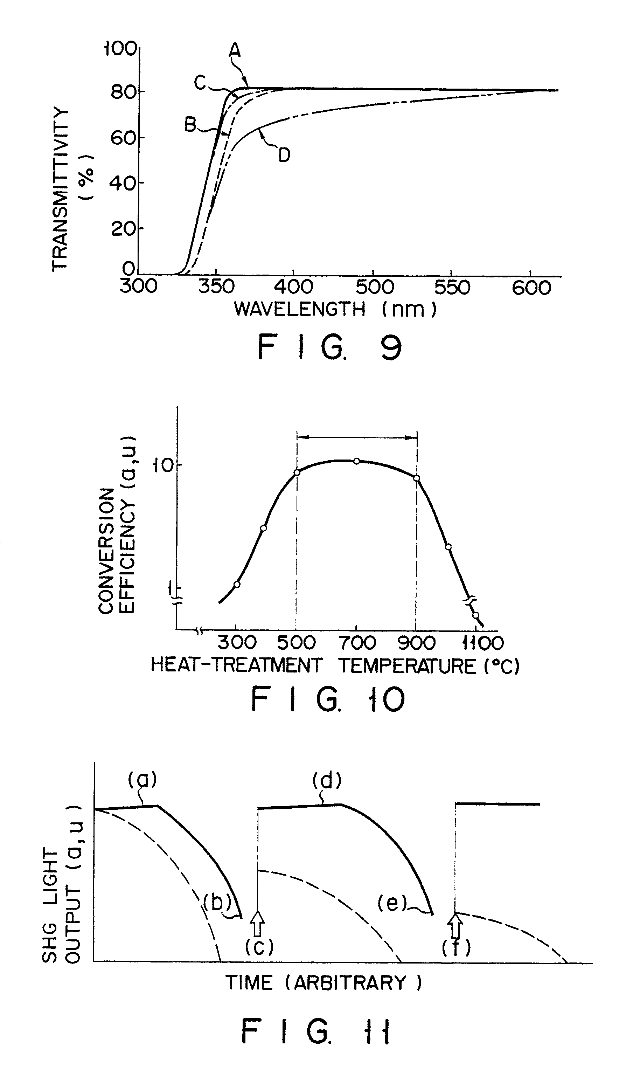

Fig. 9 shows a transmittivity of a single crystal such as KTP and that of a single crystal subjected to the above heat treatment by using light absorption spectrum measurement. Referring to Fig. 9, a solid curve A indicates characteristics of a crystal obtained by the above embodiment, and a broken curve B indicates characteristics of a crystal not subjected to the heat treatment. As shown in Fig. 9, the crystal subjected to the heat treatment is transparent to a shorter wavelength, i.e., the wavelength is shifted by about 10 nm to the short wave side. In addition, a shoulder at 350 to 400 nm is improved, and no increase is found in absorption in a blue range. As a result, a light extraction efficiency is improved.

The experiment was conducted by changing the heat-treatment temperature. When the heat-treatment temperature was 500°C to 900°C, an absorption spectrum indicated by an alternate long and short dashed curve C shown in Fig. 9 was obtained. When the heat-treatment temperature was less than 500°C, no change was found in transmittivity as in the non-treated crystal, i.e., no effect of the heat treatment was obtained. When the heat-treatment temperature exceeded 900°C, a melting phenomenon occurred on the surface of the crystal. At this time, an absorption spectrum is as indicated by an alternate long and two short dashed curve D shown in Fig. 9, and the light extraction efficiency was significantly decreased. Therefore, the heat-treatment temperature is preferably 500°C to 900°C. When the heat-treatment temperature was 800°C, no reduction was found in absorption in a blue range. As a result, the light extraction efficiency was increased.

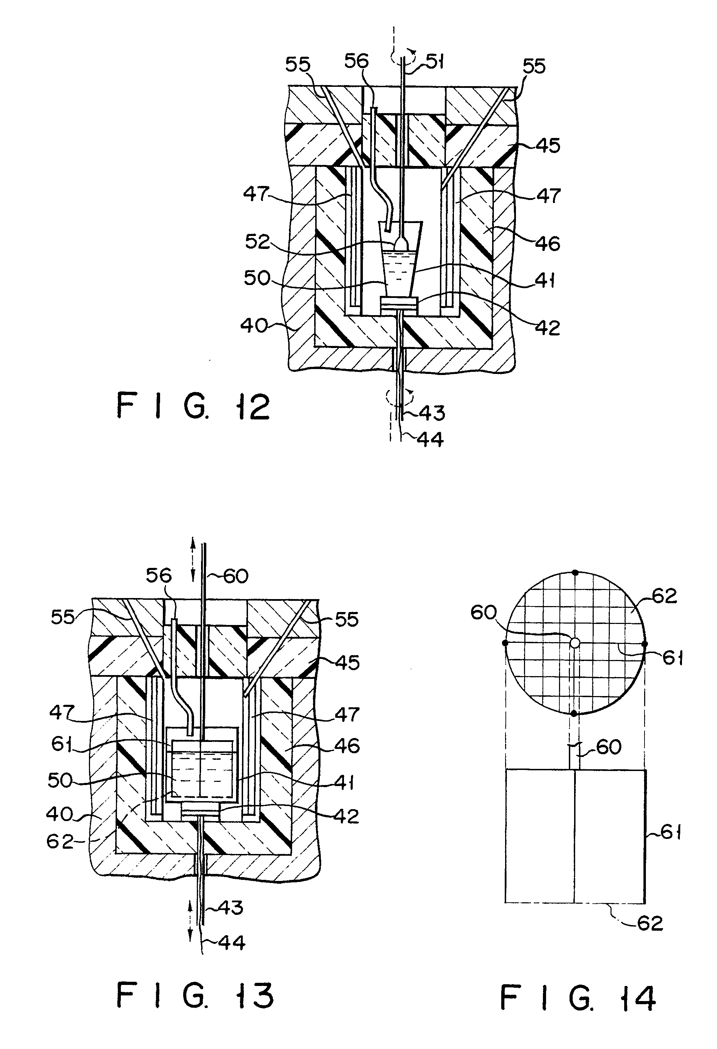

When light emitted from a Q switch YAG laser having an average output of 100 W was radiated on the crystals obtained as described above, emissions of green SHG light having a wavelength of 530 nm were found. Fig. 10 shows a relationship between the light conversion efficiency of SHG and the heat-treatment temperature. As shown in Fig. 10, a high conversion efficiency can be obtained at a treatment temperature from 500°C to 900°C, and the conversion efficiency was reduced outside this range.

As described above, when high-power laser light is radiated for a long time period, characteristic degradation is caused due to radiation. A portion where the characteristics are degraded is easily damaged by the laser light to induce a variation in refractive index or to reduce transparency of the crystal itself. For this reason, the conversion efficiency is lowered, and this state is maintained for a long time period even after radiation of the light is stopped. Although a degree of this phenomenon is small in the crystal subjected to the above heat treatment, a damage is caused by laser radiation.

As a countermeasure against this problem, a heat treatment may be performed at a temperature higher than a phase matching temperature as in the second and third embodiments. Also in this case, a large damage recovering effect could be obtained when the heat treatment was performed at a high temperature beforehand as in the above embodiment. More specifically, in an optical crystal not subjected to a high-temperature heat treatment and therefore having a large amount of impurities, reduction in output power was caused at an earlier timing as indicated by a broken line in Fig. 11. In addition, even when a heat treatment was performed at a temperature higher than the phase matching temperature to recover a damage, the crystal was not returned to its original state, i.e., the recovering effect was small. To the contrary, in an optical crystal subjected to the high-temperature heat treatment and therefore having only a small amount of impurities, reduction in output power occurs later than in the optical crystal having a large amount of impurities as indicated by a solid curve in Fig. 11. In addition, the crystal could be sufficiently recovered to its original state by the heat treatment performed at a temperature higher than the phase matching temperature.

This is because the high-temperature heat treatment performed after the optical crystal is manufactured prevents an oxygen deficiency and extracts impurities. That is, since the oxygen deficiency and the impurity amount are reduced, a damage of the crystal by laser light is improved. Therefore, the crystal is not easily broken upon radiation of light, and an efficiency of light extraction from the crystal is improved. In this embodiment, the high-temperature heat treatment is performed at 800°C. However, the same effect could be obtained at a temperature of 500°C to 900°C.

The second heat-treating method will be described below.

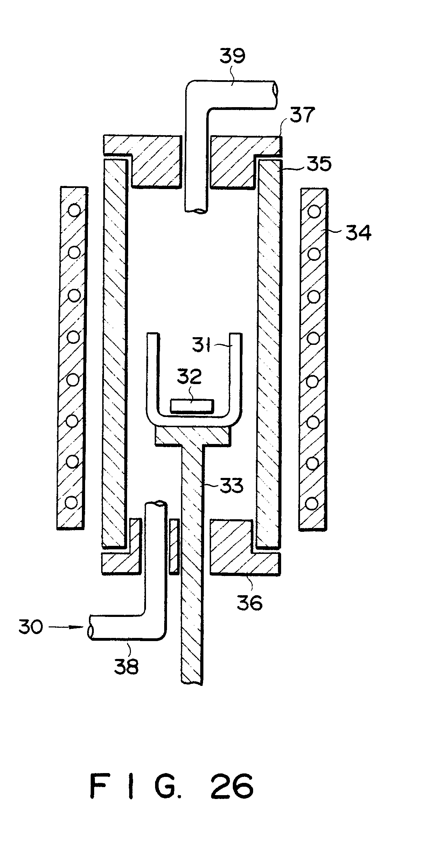

Fig. 26 is a schematic view showing an arrangement of a heat-treating apparatus used in this method. Note that the same reference numerals as in Fig. 8 denote the same parts and a detailed description thereof will be omitted. Referring to Fig. 26, reference numeral 30 denotes an atmosphere gas; 36, an alumina bottom member; 37, an alumina cover member; 38, a gas supply pipe; and 39, a gas exhaust pipe. A single crystal 32 to be refined, e.g., a KTP single crystal is contained in a crucible 31 consisting of a heat-resisting material such as ceramic, and the crucible 31 is placed on a sample table 33. In this state, a heat treatment is performed in an oxygen-containing atmosphere at a treatment temperature of 200°C and a normal pressure for about 10 hours. At this time, the atmosphere gas 30 is supplied from the gas supply pipe 38 and exhausted from the exhaust pipe 39.

In this manner, oxygen is diffused into the KTP single crystal 32 as a single crystal to replenish oxygen which is deficient in crystal growth. At the same time, an impurity in the crystal is expelled and extracted by this effect.

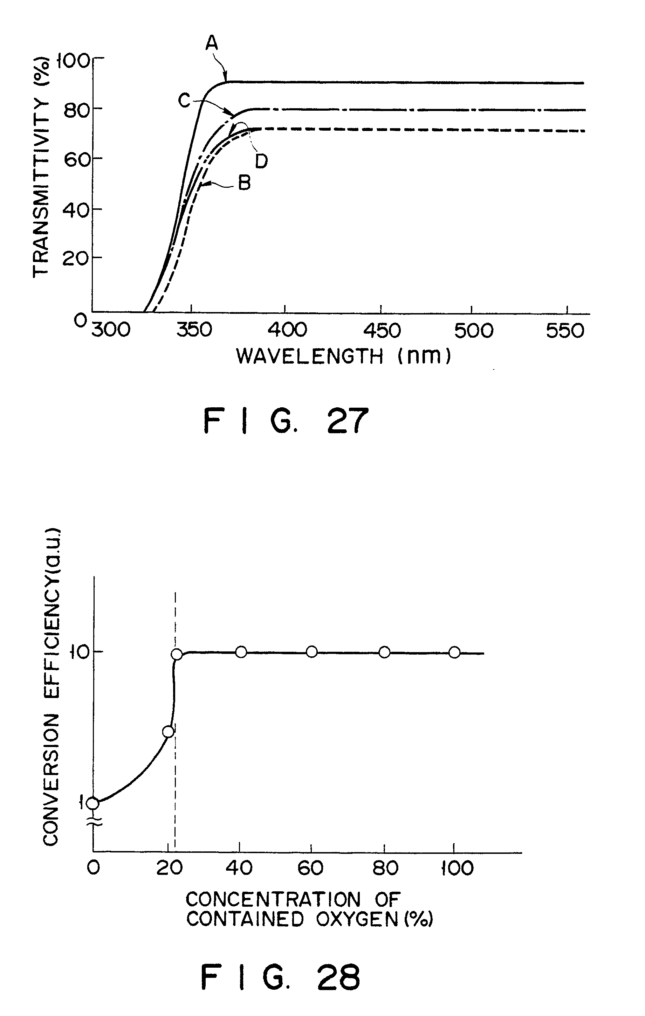

Fig. 27 shows a transmittivity of a single crystal and that of a single crystal subjected to the heat treatment obtained by using light absorption. In

Fig. 27, a solid curve A indicates a crystal obtained by the above embodiment, and a broken curve B indicates a crystal not subjected to the heat treatment.

Fig. 27 reveals that the crystal subjected to the heat treatment was more transparent with respect to short-wavelength light than that not subjected to the treatment and shifted to the short-wavelength side by about 10 nm. In addition, a shoulder at a wavelength of about 350 to 400 nm was improved, and a transmittivity toward the long-wavelength side was improved.

When the experiment was conducted by changing an oxygen concentration in the oxygen-containing atmosphere, a result as indicated by an alternate long and short dashed curve C was obtained in an atmosphere having an oxygen concentration of 20%, i.e., in the air, and substantially the same result as that obtained when an oxygen concentration was 100% was obtained when the oxygen concentration was 21% or more. In an atmosphere having an oxygen concentration of 0%, e.g., in an atmosphere containing only nitrogen, however, although an absorption end was slightly shifted to the short-wavelength side as indicated by an alternate long and two short dashed curve D, no change was found in transmittivity at the long-wavelength side. That is, no significant effect was obtained as in the case of a non-treated crystal.

As described above, oxygen as a heat-treatment atmosphere has an important roll. Therefore, when an oxygen concentration was 21% or more, a light transmittivity in a blue range was increased, and a light extraction efficiency was improved accordingly.

When light emitted from a Q switch YAG laser having an average output of 10 W was radiated on each of the crystals obtained as described above, an emission of green SHG light having a wavelength of 530 nm was obtained. Fig. 28 shows a relationship of a conversion efficiency with respect to an oxygen concentration. Fig. 28 reveals that a high conversion efficiency was obtained when the oxygen concentration was 21% or more and maintained to the oxygen concentration of 100%, and no decrease was found. The efficiency, however, was decreased in a region showing an oxygen concentration of 20% or less.

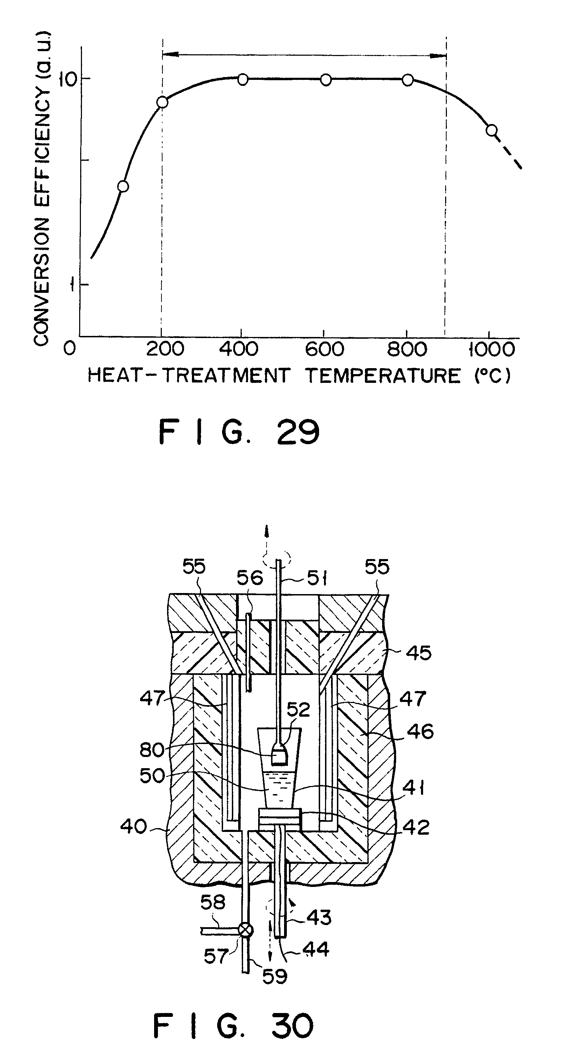

Note that the heat-treatment temperature was 200°C in the above embodiment, the experiment was conducted by changing the heat-treatment temperature. Fig. 29 shows a relationship between the heat-treatment temperature and a light conversion efficiency of SHG. As shown in Fig. 29, a high conversion efficiency was obtained within the heat-treatment temperature range of $200°C$ to $900°C$, and the conversion efficiency was decreased outside this range.

In the above embodiment, a heat treatment is performed to recover a damage in a laser light non-radiation state. The damage recovering effect, however, was found when the heat treatment was performed in a laser light radiation state. That is, a KTP single crystal was heat-treated in an oxygen-containing atmosphere at $800°C$, formed into a predetermined shape, and the heat treatment was repeatedly performed at a temperature of, e.g., $100°C$ while laser light was radiated from the end face. As a result, an SHG output was stably obtained as in Fig. 5.

In addition to the oxygen (O2) deficiency described above, "pores" are sometimes formed in a KTP single crystal to prevent the KTP single crystal from being used as an optical element. The present inventors, however, have found three methods of manufacturing a KTP single crystal in which no "pore" is formed and no impurity is mixed. KTP single crystals manufactured by these methods can be suitably used in an optical wavelength converting technique and the like. These methods will be described below with reference to the accompanying drawings.

Fig. 12 is a schematic sectional view showing an arrangement of a crystal pulling apparatus used in the first manufacturing method. Referring to Fig. 12, reference numeral 40 denotes a vessel which houses a platinum crucible 41 containing a material melt 50. The crucible 41 is placed on a support table 42, and a support shaft 43 is vertically connected to the lower surface of the support table 42. The support shaft 43 extends through the bottom portion of the vessel 40 and can be externally driven to freely rotate and move upward/downward. A thermocouple 44 for measuring the temperature of a melt of a material or the like is provided to the support shaft 43.

An alumina shielding member 45 for heat insulation is arranged above the crucible 41, and an alumina shielding member 46 for heat insulation is arranged at the bottom and side portions of the crucible 41. The crucible 41 is surrounded by the shielding members 45 and 46. A heater 47 is inserted inside the shielding member 46 to heat the crucible 41.

A support rod (crystal pulling rod) 51 which can rotate and move upward/downward is arranged above the crucible 41, and a seed crystal 52 is attached on the lower end of the support rod 51. The seed crystal 52 is brought into contact with the material melt 50 and pulled up, thereby growing crystals. Note that in Fig. 12, reference numeral 55 denotes an observation window; and 56, an atmosphere adjusting port.

A KTP single crystal manufacturing method using the apparatus having the above arrangement will be described below. $KH_2PO_4$ (potassium dihydrogenphosphate) and $TiO_2$ (titanium dioxide) were used as materials, and a ratio of the materials was set at a K excess side (a mole ratio $KH_2PO_4/TiO_2$ was 2) with respect to $KTiOPO_4$. In addition, a mixture of $K_4P_2O_7$ (potassium pyrophosphate) and $KPO_3$ (potassium metaphosphate), i.e., $K_6P_4O_{13}$ was used as a flux. In this case, a ratio of KTP to the flux (KTP/Flux) was set to be 0.75 by weight. 100 g of a material mixed in this manner and about 20 g (corresponding to one mol) of water were charged in the platinum crucible 41 of the crystal growth apparatus shown in Fig. 12. In addition, an inert gas was flowed in the vessel.

The heater 47 was heated to keep a temperature of $1,000°C$ for 10 hours to perfectly dissolve the material melt 50 in the crucible 41, thereby causing a reaction of the material and performing defoaming. This defoaming was accelerated by adding water. Subsequently, the seed crystal 52 was brought into contact with the material melt 50 so as to be wetted well with the melt 50. Thereafter, slow cooling was performed at a rate of $1°C$ per hour to perform crystal growth. At this time, the crucible 41 and the seed crystal 52 were rotated at 5 or 10 rpm.

Pulling of the seed crystal 52 was performed at a rate of 1 mm/hour. When the temperature was decreased to $800°C$, the growth was stopped to pull the grown crystals from the melt.

The KTP single crystal obtained as described above had a diameter of 1 cm and a length of 1.5 cm. No small hole or the like was found in the crystal upon microscopic observation, and the crystal was perfect transparent crystal free from cloudiness.

The results obtained by impurity analysis performed for KTP single crystals by an ICP method are shown in Table 1.

Table 1

|   | Fe | Ca | Al | Zr | Cu | Ni | Na | Water |
|---|---|---|---|---|---|---|---|---|
| a | 3 | 2 | 70 | 20 | <10 | <10 | 100 | 1.0 |
| b | 3 | 2 | 70 | 20 | <10 | <10 | 100 | 2.0 |
| c | 7 | 2 | 80 | 20 | <10 | <10 | 120 | 0.1 |
| d | 3 | 2 | 70 | 20 | <10 | <10 | 100 | 0.5 |
| e | 5 | 2 | 80 | 20 | <10 | <10 | 100 | 3.0 |
| f | 15 | 6 | 170 | 20 | <10 | <10 | 300 | - |
|   |   |   |   |   |   |   |   | (ppm. wt) |

Reference symbol a indicates a result obtained by performing impurity analysis according to the ICP method for a crystal obtained by the method described above. Reference symbol f indicates a result for comparison, which obtained by using a crystal manufactured by adding no water. As is apparent from Table 1, an amount of each element in the crystal a obtained in this embodiment is smaller than that in the crystal f . In particular, an amount of Na is reduced to be about 1/3, and Fe (transition metal) which is generally considered harmful to an optical application is reduced to be about 1/5. That is, it is apparent that an absorption by impurities is small and high purity is achieved in the obtained crystals.

Although an amount of water to be added was set to be one mol in the above method, perfectly transparent crystal having a diameter of 1 cm and a length of 1.5 cm was similarly obtained when two mols of water were added (indicated by b in Table 1). In addition, as is apparent from the ICP analysis, a contamination of Na and Fe was suppressed as described above. Furthermore, perfect crystals were similarly obtained when 0.1 mol (c), 0.5 mol (d), and 3 mols (e) of water were added. These results are also listed in Table 1. As is apparent from Table 1, an amount of impurities was suppressed under these conditions. When three or more mols of water were added, however, grown crystals were too brittle to be used. The result obtained when an addition amount of water was 0.1 mol or less was the same as that obtained when no water was added.

According to the method as described above, by adding water in an amount of 0.1 to 3 mols, and preferably, 0.5 to 2 mols together with the materials, a perfectly transparent KTP single crystal having only a small amount of impurities and no optical degradation can be obtained, and a nonlinear optical crystal having a high conversion efficiency can be obtained.

The second manufacturing method will be described below.

Fig. 13 is a schematic sectional view showing an arrangement of a crystal growing apparatus used in this method. Note that the same reference numerals as in Fig. 12 denote the same parts and a detailed description thereof will be omitted. This apparatus is basically the same as that shown in Fig. 12 except that the apparatus additionally has a mechanism for ladling out crystals precipitated in an initial period of crystal growth by using a netted ladle having a netted structure.

That is, a platinum frame 61 is arranged in a crucible 41 so as to be in substantially contact with the inner wall surface of the crucible 41, and an alumina rod 60 for supporting the platinum frame 61 is arranged on the upper portion of the claw 61. The support rod 60 of the platinum frame extends through the top of a vessel 40 and is arranged to be externally moved upward/downward. As shown in Fig. 14, the platinum frame 61 is obtained by bending four end portions of a cross-shaped member in the same direction. A netted member 62 having a net with a mesh of a 5- to 6-mm square is mounted on the bottom portion of the platinum frame 61, thereby forming a so-called netted ladle. Note that since this apparatus does not grow crystals by pulling but precipitates crystals on the surface of a material melt, the support rod 51 for pulling crystals shown in Fig. 12 need not be used.

A KTP single crystal manufacturing method using the apparatus having the above arrangement will be described below. As a material, $KH_2PO_4$ and $TiO_2$ were mixed at a ratio set at a K excessive side (a mole ratio $KH_2PO_4/TiO_2$ was two) with respect to $KTiOPO_4$. In addition, a mixture of $K_4P_2O_7$ and $KPO_3$ was used as a flux so that a ratio of KTP to the flux (KTP/Flux) was 0.75 by weight. The material mixed in this manner was charged in the platinum crucible 41 of the crystal growing apparatus shown in Fig. 13.

The crucible 41 was heated by a heater 47 and held at 1,000° C for 10 hours to perfectly dissolve the material 50 in the crucible 41, thereby causing a reaction of the material and performing defoaming. Thereafter, slow cooling was performed at a rate of 1° C per hour to perform crystal growth. When the temperature reached 930° C, the support rod 60 was perfectly pulled up from the material melt 50 to ladle up grown crystals. At this temperature, crystal growth was not completed.

Subsequently, the temperature was increased up to 1,000°C again, slow cooling was performed at a rate of 1°C per hour after the temperature reached 1,000°C, and crystal growth was performed until the temperature reached 800°C. When the temperature reached 800°C, the crystal growth was completed. After the temperature reached 800°C, slow cooling was performed at a rate of 40°C per hour to stop the crystal growth. When the temperature of the crucible 41 was returned to room temperature, the crucible 41 was taken out from the vessel 40 and washed with flowing water for several hours to wash away the flux, thereby extracting only grown KTP crystals.

As a result, several KTP crystals having a size of 10 mm × 10 mm × 5 mm were obtained. No small hole was found in the crystals upon microscopic observation, and the crystals were perfectly transparent crystals free from cloudiness. However, the crystals ladled up beforehand had cloudiness, and "pores" were found in the crystals.

Table 2 below shows results obtained by performing impurity analysis by an ICP method for the obtained KTP single crystals.

Table 2

|  | Fe | Ca | Al | Zr | Cu | Ni | Na |
|---|---|---|---|---|---|---|---|
| I | 1 | 1 | 10 | 30 | <10 | <10 | 10 |
| II | 12 | 2 | 30 | 40 | <10 | <10 | 40 |
|  |  |  |  |  |  | (ppm.wt) | |

I indicates a result obtained by performing impurity analysis by the ICP method for the crystal obtained by this method, and II indicates a result obtained by the ladled up crystal as a comparative example. As is apparent from Table 2, a contamination of each element in the crystal I is smaller than that in the crystal II. In particular, an amount of Na is reduced to be about 1/4, and an amount of Fe (transition metal) which is generally considered harmful to an optical application is reduced to be about 1/12. It is apparent that an absorption by impurities is small and high purity is achieved in the crystal obtained by this method.

When light emitted from a Q switch YAG laser (wavelength = 1,060 nm) having an average output of 10 W was radiated on the crystals I and II, an emission of green SHG light having a wavelength of 530 nm was observed and no degradation was found even after long time radiation in the crystal I. The crystal II, however, was too degraded to be used.

According to the method as described above, by ladling up crystals grown in an initial period, impurities in the material melt can be removed, and a contamination of impurities in crystals grown in the next period can be suppressed. As a result, a perfectly transparent KTP crystal free from optical degradation can be obtained, and a nonlinear optical crystal having a high conversion efficiency can be realized.

Note that the crystal manufacturing method is not limited to those of the above embodiments. For example, it is obvious that the same results and effects can be obtained by performing crystal growth in accordance with a Kyropoulos' method using a seed crystal after initial crystals are ladled up. In addition, even when a liquid-phase growth method is used, by removing crystals grown in an initial period, crystals having only a small amount of impurities can be obtained in the next crystal growth period. Furthermore, by performing the second manufacturing method in combination with the first manufacturing method (in which water is added to the material), a KTP single crystal in which a contamination of impurities is further reduced can be obtained.

The third manufacturing method will be described below.

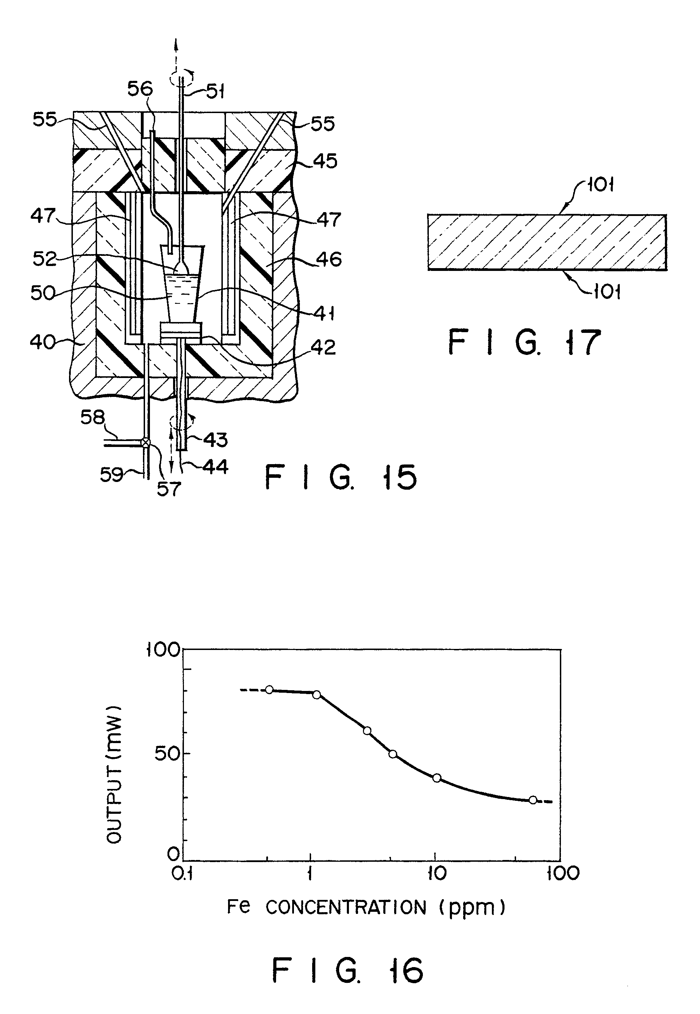

Fig. 15 is a schematic sectional view showing an arrangement of a crystal growth apparatus used in this embodiment. Note that the same reference numerals as in Fig. 12 denote the same parts and a detailed description thereof will be omitted. This apparatus is basically the same as that shown in Fig. 12 except that an exhaust system for exhausting gas from a vessel 40 is divided into two systems. That is, the vessel 40 is connected to an evacuation port 58 and an atmospheric gas exhaust port 59 via a three-way cock 57.

A KTP single crystal manufacturing method using the apparatus having the above arrangement will be described below. Substances similar to those used in the first manufacturing method were used as a material and a flux, and the material mixed at the same rate as in the first manufacturing method was charged in a platinum crucible 41 of the crystal growth apparatus shown in Fig. 15.

The three-way cock 57 was operated to open the evacuation port 58, thereby evacuating the entire system to an order of $10^{-3}$ Torr. Subsequently, the three-way cock 57 was operated to close the evacuation port 58, and high-purity helium gas (moisture dew point < -70°C) was supplied from an upper atmosphere adjusting port 56. The bottom three-way cock 57 was operated to open the gas exhaust port 59 to flow the helium gas for several hours.

Thereafter, as in the first manufacturing method, a heater 47 was heated and held at 1,000°C for 10 hours to perfectly dissolve the material 50 in the crucible 41, thereby causing a reaction of the material and performing defoaming. In addition, a seed crystal 52 was brought into contact with the material melt 50, and slow cooling was performed at a rate of 1°C per hour, thereby performing crystal growth. At this time, the crucible 41 and the seed crystal 52 were rotated at 5 and 10 rpm, respectively. Pulling was performed by pulling up the seed crystal 52 at a rate of 1 mm/hour. When the temperature reached 800°C, growth was stopped, and grown crystal was extracted from the melt.

The KTP single crystal obtained in this manner had a diameter of 1 cm and a length of 1.5 cm. No small hole or the like was found in the crystal upon microscopic observation, and the crystal was perfectly transparent crystals free from cloudiness.

When high-purity argon gas (moisture dew point < -70°C) was used as an atmospheric gas in place of high-purity helium gas, perfectly transparent crystal having a diameter of 1 cm and a length of 1.5 cm was similarly obtained. When impurity analysis according to the ICP method was performed for the obtained crystals, the content of Fe was 0.5 ppm.

In the above method, evacuation is performed beforehand. However, when air of the entire system was replaced with a high-purity inert gas without performing evacuation and crystal growth was similarly performed, KTP single crystals having the same quality as described above were obtained. A content of an Fe impurity measured by the ICP method was 3 ppm. When evacuation was performed and high-purity nitrogen gas (moisture dew point < -70°C) was used as an atmosphere, an Fe concentration measured by the ICP method was 5 ppm. When the same atmosphere was used but no evacuation was performed beforehand, the Fe concentration was 10 ppm. When crystal growth was performed in the air (atmosphere) without performing these operations, the Fe content was 70 ppm.

In the above method, a cooling rate in the crystal growth conditions is 1°C per hour. It is conventionally considered that an amount of impurities entrapped in crystals is decreased as a cooling rate is decreased. Therefore, a cooling rate in the above conditions under which the Fe concentration of 0.5 ppm was obtained was changed to 0.5°C per hour. As a result, an Fe concentration of the obtained crystals was 1 ppm. That is, an entrapped amount of an Fe impurity has almost no relation to the cooling rate.

When light emitted from a Q switch YAG laser (wavelength = 1,060 nm) having an average output of 10 W was radiated on the obtained crystals, an emission of green SHG light having a wavelength of 530 nm was found. Fig. 16 shows a relationship between an output of the emitted light and an Fe concentration in the crystal. As shown in Fig. 16, a high conversion efficiency was obtained when the Fe concentration was 1 ppm or less, i.e., an Fe concentration dependency was found.

According to the method as described above, in the manufacture of a KTP nonlinear optical crystal, a high-purity inert gas (moisture dew point < -70°C) atmosphere is used throughout the crystal growth steps, and the entire system is evacuated before the high-purity inert gas atmosphere is set. As a result, a KTP single crystal having a very small Fe concentration can be obtained, and a nonlinear optical crystal having a high conversion efficiency can be realized.

A continuous treating method from crystal growth to a heat treatment will be described below.

Fig. 30 is a schematic view showing an arrangement of a crystal-growing and heat-treating apparatus used in this method. Since this apparatus is basically the same as that shown in Fig. 15, the same reference numerals as in Fig. 15 denote the same parts and a detailed description thereof will be omitted.

A KTP single crystal heat-treating method using the apparatus having the above arrangement will be described. After crystals were grown by using the third manufacturing method, growth was stopped when a temperature reached 800°C, and the grown crystals were extracted from a melt and placed at a position as shown in Fig. 30. In this state, an atmosphere gas was changed to an oxygen-containing atmosphere gas, e.g., an atmosphere gas having an oxygen concentration of 100% to sufficiently perform substitution, and a heat treatment was performed at a normal pressure for about 10 hours.

In this manner, oxygen is diffused in a KTP single crystal 80 as a single crystal to replenish oxygen which is deficient in crystal growth. At the same time, an impurity in the crystal is expelled and extracted by this effect.

Although a gas having an oxygen concentration of 100% was used as an atmosphere gas in the above method, the effect of this method was obtained when the oxygen concentration was 21% or more, and the obtained result was the same as that shown in Fig. 27. In addition, when light emitted from a Q switch YAG laser having an average output of 10 W was radiated on each crystal obtained as described above, a stable SHG output was obtained as in the result shown in Fig. 28.

In the above embodiment, the grown crystal was extracted from the melt at a temperature of 800°C and the heat treatment was performed at the same temperature. However, the same effect was obtained when the crystal growth was stopped at 900°C to remove the crystal from the melt and the heat treatment was performed at the same temperature. In addition, even when the heat-treatment temperature with respect to the crystal extracted from the melt at a temperature of 800°C was decreased to 200°C, the same effect and a good result were obtained, and a stable SHG output was obtained as in the result shown in Fig. 29.

Although an ICP method is conventionally available as a method of measuring an impurity contained in a single crystal, this method has a problem of destruction of a single crystal. The present inventors, however, have found a method of nondestructively measuring an impurity contained in a single crystal. In this method, X-rays are radiated on a KTP single crystal, and a change of light transmittivity, with time is measured to determine an amount of a 3d impurity (transition element). This measuring method will be described below.

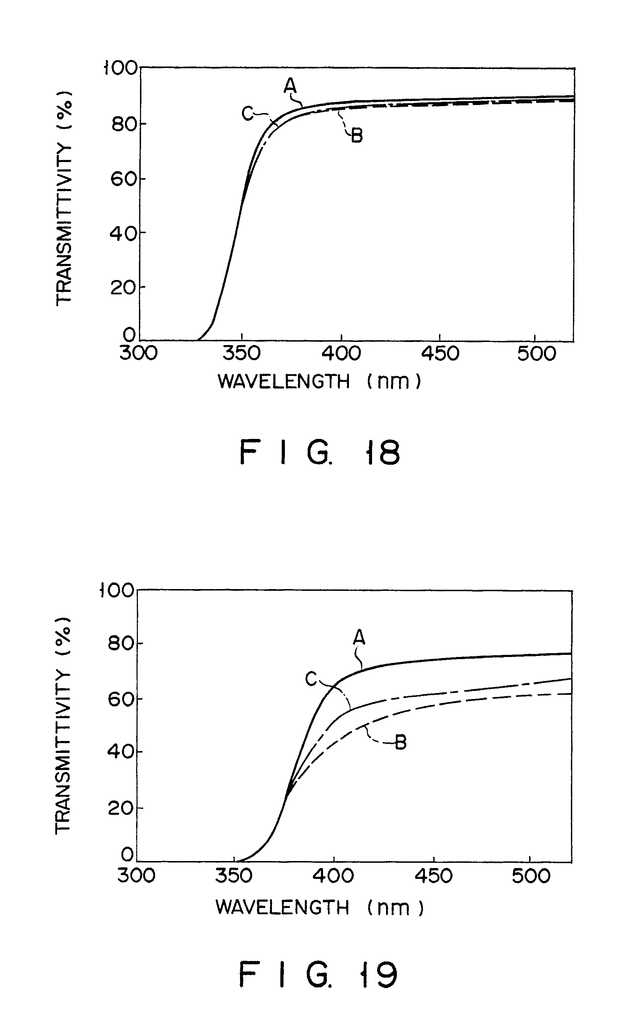

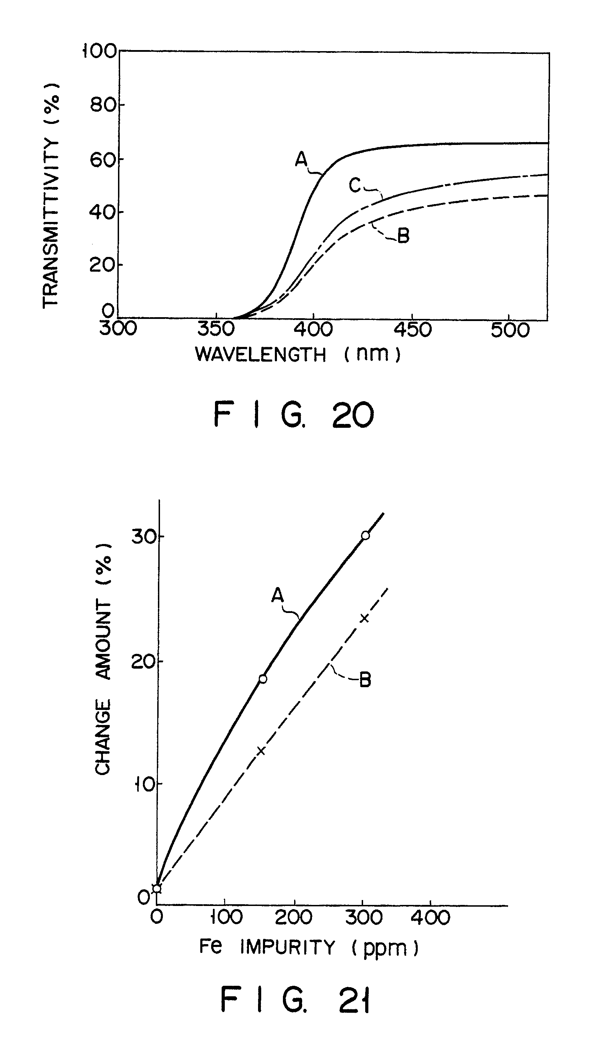

As shown in Fig. 17, optical polishing is performed for the two surfaces of a KTP single crystal to form optical polished surfaces 101, and X-rays are radiated for two hours under the conditions of 40 kV and 20 mA. Fig. 18 is a graph showing comparison between light transmittivities of non-doped KTP single crystals, in which a solid curve A, a broken curve B, and an alternate long and dashed curve C indicate measurement values obtained before, immediately after, and 24 hours after X-ray radiation, respectively. Fig. 19 is a graph showing comparison between light transmittivities of KTP single crystals to which 150 ppm of an Fe impurity is added, in which curves A, B, and C have the same meanings as in Fig. 18. Fig. 20 is a graph showing comparison between light transmittivities of KTP single crystals to which 300 ppm of an Fe impurity is added, in which curves A, B, and C have the same meanings as in Fig. 18.

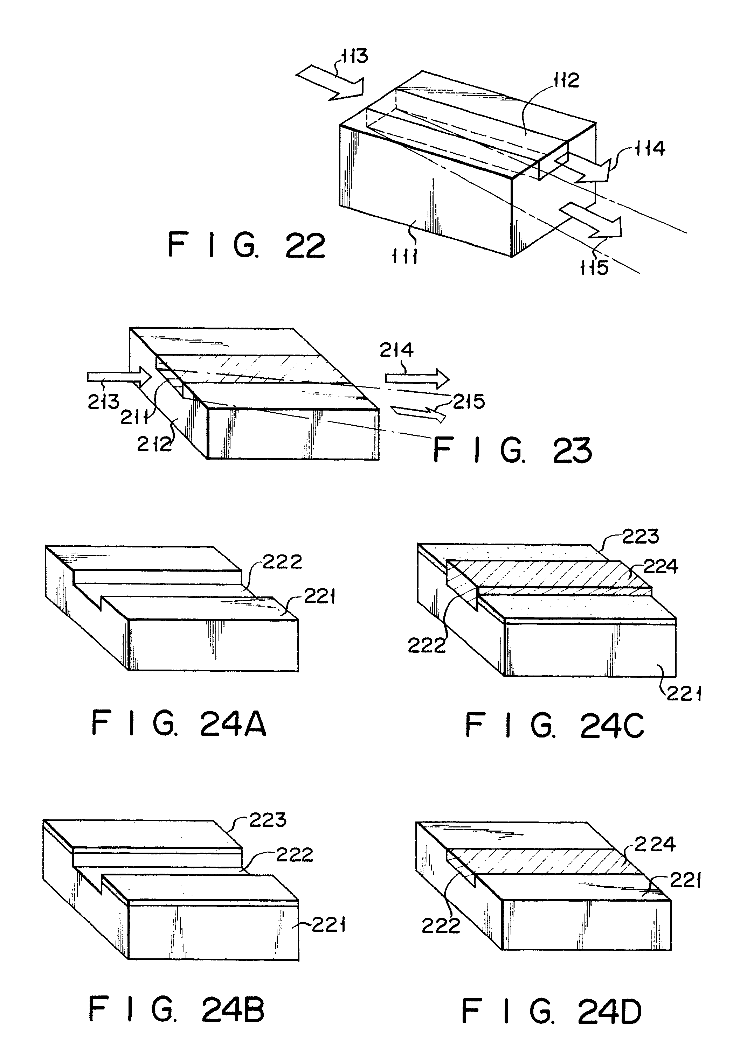

When calibration curves are formed on the basis of the above results, a graph as shown in Fig. 21 is obtained. That is, change amounts in light transmittivity obtained upon X-ray radiation are different in accordance with impurity concentrations, and this can be represented in the form of a graph. Note that in Fig. 21, a solid curve A and a broken curve B indicate measurement values obtained immediately after and 24 hours after X-ray radiation.

It is assumed that the above variation with time in light transmittivity of a KTP single crystal is obtained since the valence of a 3d impurity contained in the crystal is changed when X-rays are radiated on the KTP single crystal. From these facts, it can be understood that the amount of a 3d impurity in a single crystal can be determined by setting a power and a time of X-ray radiation and measuring light transmittivities immediately after and a predetermined time period after radiation. This method is not limited to KTP, but can be applied to other optical crystals.

As described above, the present invention provide a nonlinear optical crystal damage measuring method which can easily measure the presence/absence of a damage of a nonlinear optical crystal and can be carried out while the nonlinear optical crystal is incorporated in an optical system, and a nonlinear optical crystal damage recovering apparatus which can supply a constantly stable nonlinear optical crystal without replacing the nonlinear optical crystal and can be used while the nonlinear optical crystal is incorporated in an optical system. As an optical system incorporating a nonlinear optical crystal, a wavelength converting optical element using SHG of a nonlinear optical crystal is developed. As shown in Fig. 22, this wavelength converting optical element is constituted by, e.g., a KTP crystal substrate 111 and an ion-exchange KTP waveguide 112 formed on the substrate 111. When YAG laser light ($\lambda$ = 1,060 nm) 113 is incident on one end face of the wavelength converting optical element, an optical harmonic ($\lambda$ = 530 nm) 115 obtained by SHG is emitted together with a fundamental wave ($\lambda$ = 1,060 nm) 114 from the other end face.

A KTP crystal is considered to be currently most excellent as an SHG material for a YAG laser. This crystal has a high laser damage threshold value, is thermally stable and not moisture-absorptive, and has good temperature characteristics because a variation in its refractive index according to a temperature change is small. The crystal, however, also has a problem in which the wavelength of light at a short-wavelength side generated by SHG is limited to 530 nm due to a relationship with phase matching, resulting in a very low conversion efficiency at the short-wavelength side. In other words, in order to obtain light having a wavelength shorter than 530. nm, a light source having a high optical output must be used as a fundamental wave light source. Therefore, if a semiconductor laser having only a low optical output is used as a light source of input light, an optical output obtained after wavelength conversion is too low to be put into practical use.

The present inventors have found that a wavelength converting optical element having a high conversion efficiency at a short-wavelength side can be obtained by using, as an optical waveguide layer to be formed on the KTP crystal, a substance which can be easily formed onto a KTP crystal, has a refractive index higher than that of a KTP crystal, and is superior in absorption characteristics. That is, by using this wavelength converting optical element, blue laser light having a practically high enough output can be obtained even if the element is used in combination with a semiconductor laser having a low optical output. More specifically, this wavelength converting optical element is an optical waveguide type wavelength converting optical element in which an optical waveguide layer is formed on a KTP single crystal substrate and which outputs a harmonic of incident light. In this element, $K_{1-x}Rb_xTiOPO_4$ having a higher refractive index than that of a KTP single crystal is used as the optical waveguide layer, and the value of a ratio X of Rb is set within the range of $0.1 \leq X \leq 0.4$.

This wavelength converting optical element will be described below with reference to the accompanying drawings.

Fig. 23 is a schematic perspective view showing an arrangement of the above wavelength converting optical element. Referring to Fig. 23, reference numeral 211 denotes a waveguide portion obtained by adding, e.g., Rb to a nonlinear material. Three surfaces of the waveguide portion 211 are covered with a nonlinear optical crystal 212 such as KTP. The sectional shapes of the waveguide portion 211 and the optical crystal crystal 212 are both rectangular.

The waveguide portion 211 contains a large amount of Rb in consideration of a refractive index. Therefore, when laser light 213 having a wavelength of about 900 nm is radiated on one end surface as external excitation light from, e.g., a semiconductor laser (not shown), an optical second harmonic 215 (blue laser light having a wavelength of about 450 nm) by SHG is output from the other end surface together with fundamental wave 214 ($\lambda$ = 900 nm).

A method of manufacturing the wavelength converting optical element shown in Fig. 23 will be described below with reference to Figs. 24A to 24D. First, as shown in Fig. 24A, a rectangular recess portion 222 is formed by etching or the like in an upper surface central portion of a flat plate 211 consisting of a nonlinear optical material (KTP). Subsequently, as shown in Fig. 24B, an $SiO_2$ thin film 223 is formed as a mask on the surface except for the recess portion 222. Note that the recess portion 222 need not be formed beforehand but may be formed, after the thin film 223 is formed, on the upper surface of the flat plate 221 by selective etching by using the thin film 223 as a mask.

The flat plate 221 having the recess portion 222 is dipped in a solution containing $KPO_3$ as a basic flux. This solution contains 5 mol% of $RbPO_3$ with respect to $KPO_3$ in consideration of a refractive index. The solution is cooled from 900°C at a rate of 1°C/day for two days to grow a 3 $\mu$m thick $K_{1-x}Rb_xTiOPO_4$ thin film 224 on the flat plate 221 as shown in Fig. 24C. Subsequently, upper portions of the thin films 223 and 224 are etched by chemical etching or the like to leave the thin film 224 on only the recess portion 222 as shown in Fig. 24D. The thin film 224 left on the recess portion 222 constitutes the waveguide portion 211, thereby realizing the structure shown in Fig. 23. Thereafter, the end faces of the waveguide portion 211 may be mirror-processed as needed.

When the laser light 213 having a wavelength of 900 nm is radiated on the wavelength converting optical element manufactured as described above, the optical second harmonic 215 is emitted from the end face of the waveguide portion 211 through the waveguide portion 211 containing Rb together with fundamental wave 214 ($\lambda$ = 900 nm). Therefore, the blue laser light 215 having a wavelength of about 450 nm is obtained from the end face of this optical element. At this time, the power of the blue laser light was high enough to be used for an optical disk or the like.

In the waveguide portion 211 of the wavelength converting element, 0.4 was obtained as the value of X from X-ray evaluation with respect to the Rb addition amount of 5 mol. In addition, the waveguide was formed by changing the Rb addition amount to be 0.5, 1, 3, and 7 mol. The values of X were 0.01, 0.05, 0.2, and 0.5, respectively.

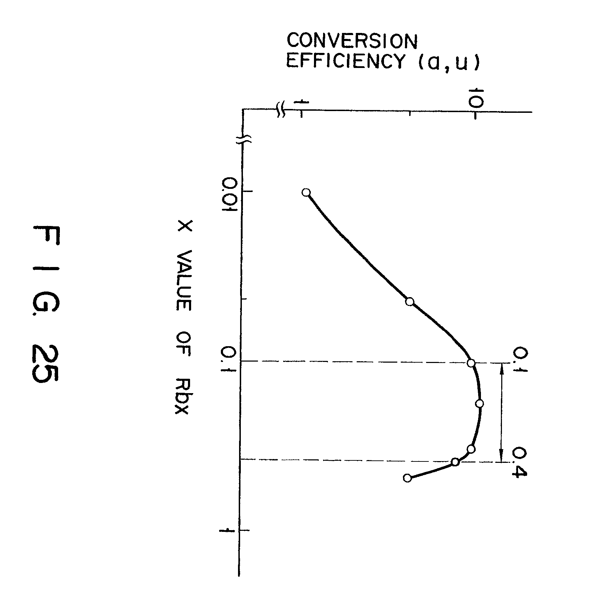

When laser light was radiated on the wavelength converting optical elements obtained in this manner, blue laser light was obtained, and a relationship of a conversion efficiency with respect to the value of X as shown in Fig. 25 was obtained. As is apparent from Fig. 25, a maximum conversion efficient is obtained when the X value of Rb is 0.1 to 0.4, and the conversion efficiency is decreased when the X value is either increased or decreased from this range. This is because the refractive index of the Rb addition layer is increased. That is, when the refractive index is increased even slightly, an efficiency of light extraction from the element is increased.

As described above, according to this wavelength converting optical element, short-wavelength laser light (blue) can be generated by only radiating excitation light (laser light emitted from a semiconductor laser) on the waveguide portion 211. Therefore, a compact short-wavelength light source having a low consumption power can be realized. In addition, since a high conversion efficiency can be obtained by setting the X value of Rb to be 0.1 to 0.4, blue laser light having a high power can be obtained. Furthermore, this wavelength converting optical element can be advantageously realized by a simple

EP 0 420 692 A2

arrangement obtained by only adding Rb to a waveguide of a conventional waveguide type wavelength converting optical element.


## Claims

1. A method for measuring a damage of a nonlinear optical crystal, comprising the steps of:
irradiating light on a nonlinear optical crystal for generating a second harmonic of incident light; and
metering transmission light obtained by the light irradiation to measure a damage of said nonlinear optical crystal.

2. A method according to claim 1, characterized in that the light irradiation is performed for said nonlinear optical crystal in a direction substantially perpendicular to the generated optical second harmonic.

3. A method according to claim 2, characterized in that the light used in the light irradiation is visible light.

4. A method according to claim 1, characterized in that said nonlinear optical crystal is incorporated in an optical waveguide type wavelength converting optical element in which an optical waveguide layer is formed on a $KTiOPO_4$ single crystal substrate and which outputs a harmonic of incident light, $K_{1-x}Rb_xTiOPO_4$ having a refractive index higher than that of a $KTiOPO_4$ single crystal is used as said optical waveguide layer, and a value of a ratio X of Rb in $K_{1-x}Rb_xTiOPO_4$ is set to fall within the range of $0.1 \leq X \leq 0.4$.

5. A method according to claim 1, characterized in that said nonlinear optical crystal is obtained by growing a $KTiOPO_4$ single crystal from a material melt by a flux method and heat-treating the obtained single crystal in an oxygen-containing atmosphere at a normal pressure and a temperature of $500^\circ C$ to $900^\circ C$.

6. A method according to claim 1, characterized in that said nonlinear optical crystal is obtained by growing a $KTiOPO_4$ single crystal from a material melt by a flux method and heat-treating the obtained single crystal in an atmosphere containing oxygen of 21% or more at a normal pressure.

7. A method according to claim 6, characterized in that said heat treatment is performed at $200^\circ C$ to $900^\circ C$.

8. An apparatus for recovering a damage of a nonlinear optical crystal, comprising means for heating a nonlinear optical crystal for generating a second harmonic of incident light.

9. An apparatus for recovering a damage of a nonlinear optical crystal, comprising:
irradiating means for irradiating light on said nonlinear optical crystal for generating a second harmonic of incident light;
metering means for metering light transmitted through said nonlinear optical crystal upon light irradiation by said irradiating means; and
heating means for heating said nonlinear optical crystal in accordance with a result of said metering means.

10. An apparatus according to claim 9, characterized in that the light irradiation is performed for said nonlinear optical crystal in a direction substantially perpendicular to the generated optical second harmonic.

11. An apparatus according to claim 8 or 9, characterized in that a heat-treatment temperature of said heating means is higher by $1^\circ C$ than a phase matching temperature of said nonlinear optical crystal.

12. An apparatus according to claim 8 or 9, characterized in that said heating means is one member selected from the group consisting of a metal heater, a laser light source, an infrared lamp, and an infrared flash lamp.

13. An apparatus according to claim 8 or 9, characterized in that said nonlinear optical crystal is incorporated in an optical waveguide type wavelength converting optical element in which an optical waveguide layer is formed on a $KTiOPO_4$ single crystal substrate and which outputs a harmonic of incident light, $K_{1-x}Rb_xTiOPO_4$ having a refractive index higher than that of a $KTiOPO_4$ single crystal is used as said optical waveguide layer, and a value of a ratio X of Rb in $K_{1-x}Rb_xTiOPO_4$ is set to fall within the range of $0.1 \leq X \leq 0.4$.

14. An apparatus according to claim 8 or 9, characterized in that said nonlinear optical crystal is obtained by growing a $KTiOPO_4$ single crystal from a material melt by a flux method and heat-treating the obtained single crystal in an oxygen-containing atmosphere at a normal pressure and a temperature of $500^\circ C$ to $900^\circ C$.

15. An apparatus according to claim 8 or 9, characterized in that said nonlinear optical crystal is obtained by growing a $KTiOPO_4$ single crystal from a material melt by a flux method and heat-treating the obtained signal crystal in an atmosphere containing oxygen of 21% or more at a normal pressure.

16. An apparatus according to claim 15, characterized in that said heat treatment is performed at $200^\circ C$ to $900^\circ C$.

17. An apparatus according to claim 8 or 9, characterized in that said crystal growth and said heat treatment are performed in the same chamber.

F I G. 1

TIME (ARBITRARY)

F I G. 2

F I G. 3

F I G. 4

F I G. 5

F I G. 6

F I G. 7

F I G. 8

F I G. 9

F I G. 10

F I G. 11

F I G. 12

F I G. 13

F I G. 14

F I G. 15

F I G. 17

F I G. 16

F I G. 18

F I G. 19

F I G. 20

F I G. 21

F I G. 22

F I G. 23

F I G. 24A

F I G. 24C

F I G. 24B

F I G. 24D

F I G. 25

F I G. 26

F I G. 27

F I G. 28

28

F I G. 29

F I G. 30